# FASCICULE DE BREVET EUROPEEN

(11) **EP 4 433 291 B1**
(45) Date de publication et mention de la délivrance du brevet: **10.12.2025**
(21) Numéro de dépôt: 22802681.1
(22) Date de dépôt: 25.10.2022
(51) Int. Cl.: B29D 30/02, B60B 9/26, B60B 31/00, B60B 1/00

(54) **DISPOSITIF POUR ASSEMBLER LES RAYONS D'UN BANDAGE POUR ROUE AU MOYEN DE POUSSOIRS QUI SONT ACTIONNES PAR DES POINÇONS A RAMPES**
VORRICHTUNG ZUR MONTAGE DER SPEICHEN EINES REIFENS FÜR EIN RAD MITTELS DURCH RAMPENFÖRMIGE STANZEN BETÄTIGTER SCHUBELEMENTE
DEVICE FOR ASSEMBLING THE SPOKES OF A TYRE FOR A WHEEL BY MEANS OF THRUST MEMBERS ACTUATED BY RAMPED PUNCHES

(30) Priorité: 15.11.2021 FR 2112029
(43) Date de publication de la demande: 25.09.2024
(73) Titulaire: COMPAGNIE GENERALE DES ETABLISSEMENTS MICHELIN, 63000 Clermont-Ferrand (FR)
(72) Inventeur: BESSAC, Christophe, 63040 CLERMONT-FERRAND Cedex 9 (FR); CHEVREL, Lucie, 63040 CLERMONT-FERRAND Cedex 9 (FR); DELORME, Jean-Claude, 63040 CLERMONT-FERRAND Cedex 9 (FR); BUNGE, Yorrick, 63040 CLERMONT-FERRAND Cedex 9 (FR); BOUCHEREAU, David, 63040 CLERMONT-FERRAND Cedex 9 (FR)
(74) Mandataire: M.F.P. Michelin
(86) Numéro de dépôt international: PCT/FR2022/052016
(87) Numéro de publication internationale: WO 2023/084170

(56) Documents cités:
- WO-A1-2018/125190
- WO-A1-2019/103728
- US-A1- 2015 210 025

## Description

La présente invention concerne le domaine de la fabrication des bandages pour roues de véhicule, et plus particulièrement la fabrication de bandages dits « sans air », au sein desquels une bande annulaire périphérique comprenant la bande de roulement est soutenue mécaniquement par une pluralité de rayons solides qui relient ladite bande annulaire périphérique à un moyeu.

Le document WO-2019/103728 décrit un outillage qui permet de fixer les rayons simultanément au moyeu et à la bande annulaire périphérique, en pressant un pied de chacun desdits rayons contre ledit moyeu, et l'autre pied de chacun desdits rayons contre la bande annulaire périphérique, au moyen de poussoirs qui sont entraînés en déplacement radial par des membranes gonflables annulaires.

Plus précisément, dans cet outillage connu, tous les poussoirs qui agissent selon une direction radiale centripète pour plaquer contre le moyeu les pieds radialement internes des différents rayons sont entraînés simultanément par un premier jeu de deux membranes, qui comprend une membrane inférieure située au dos de l'une des extrémités axiales desdits poussoirs, et une membrane supérieure située au dos de l'autre extrémité axiale desdits poussoirs.

De même, tous les poussoirs qui agissent selon une direction radiale centrifuge pour plaquer contre la bande annulaire périphérique les pieds radialement externes de ces mêmes rayons sont entraînés simultanément par un second jeu de deux membranes qui viennent en prise respectivement contre le dos des deux extrémités axiales opposées desdits poussoirs.

Si un tel outillage donne globalement satisfaction, il peut toutefois présenter certaines limitations.

En particulier, un tel outillage peut être relativement sensible à d'éventuelles variations locales des frottements qui s'exercent sur les différents poussoirs lors des déplacements radiaux desdits différents poussoirs, ou bien à des variations dans le comportement mécanique individuel des différents rayons en réaction au gonflage de la membrane et à l'action correspondante des poussoirs, ou bien encore à une éventuelle répartition inégale du gaz de gonflage soit au sein d'une même membrane soit entre deux membranes d'un même jeu de membranes.

Selon les circonstances, il est en effet possible que ces facteurs puissent causer un blocage des poussoirs par arc-boutement, ou bien un léger défaut de positionnement de certains rayons qui pourra parfois conduire à un chevauchement indésirable des pieds de deux rayons voisins.

En outre, les facteurs susmentionnés peuvent également être à l'origine d'une certaine hétérogénéité, d'un rayon à l'autre, dans l'intensité des efforts de compression radiale qui pressent les différents rayons contre le moyeu, respectivement contre la bande annulaire périphérique, pendant le processus de collage des rayons. Or, si l'effort de compression radiale exercé pendant l'assemblage est significativement insuffisant, cela peut éventuellement conduire à l'apparition d'une zone de fragilité dans la jonction entre le pied du rayon et le moyeu, ou respectivement la bande annulaire périphérique, et donc à une mise au rebut du bandage.

Pour toutes ces raisons, il peut être parfois difficile d'obtenir un bandage parfaitement homogène à l'issue du processus d'assemblage connu, ou bien encore de garantir la parfaite reproductibilité dudit processus d'un bandage à l'autre.

Par ailleurs, les membranes peuvent être sujettes à des agressions mécaniques, notamment par abrasion, coupure ou perforation, ce qui peut, dans certains cas, limiter la durée de vie de l'outillage.

Les objets assignés à l'invention visent par conséquent à remédier aux inconvénients susmentionnés et proposer un nouvel outillage d'assemblage particulièrement robuste et durable, et qui permette une fabrication rapide, reproductible, fiable et précise de bandages sans air qui présenteront une structure homogène et d'excellente qualité.

Les objets assignés à l'invention sont atteints au moyen d'un dispositif d'assemblage destiné à la fabrication d'un bandage qui comprend un moyeu présentant un axe central, une bande annulaire périphérique coaxiale au moyeu, et une pluralité de rayons qui relient le moyeu à la bande annulaire périphérique et qui comprennent à cet effet chacun un premier pied fixé sur une face radialement externe dudit moyeu formant une première face réceptrice et un second pied fixé sur une face radialement interne de ladite bande annulaire périphérique formant une seconde face réceptrice, ledit dispositif d'assemblage comprenant une pluralité de sous-ensembles presseurs qui sont affectés chacun à la fixation d'un rayon distinct et qui comportent chacun au moins un poussoir agencé pour presser l'un des premier et second pieds du rayon concerné contre la face réceptrice du moyeu ou respectivement de la bande annulaire périphérique qui correspond audit pied du rayon, ledit dispositif d'assemblage étant caractérisé en ce que chacun desdits sous-ensembles presseurs comprend un poinçon qui est monté mobile selon une direction axiale parallèle à l'axe central, sous la dépendance d'un système d'entraînement, et qui présente au moins une rampe qui, dans un plan radial contenant l'axe central, dévie progressivement de la direction axiale, et qui coopère avec un organe d'appui solidaire du poussoir, de sorte que, lorsque le système d'entraînement déplace axialement le poinçon à l'encontre de l'organe d'appui, la rampe provoque un déplacement radial dudit organe d'appui et par conséquent du poussoir, et génère ainsi, par l'intermédiaire de l'organe d'appui, un effort de serrage qui presse radialement ledit poussoir, et par conséquent le pied du rayon, à l'encontre de la face réceptrice.

Avantageusement, l'agencement proposé par l'invention permet, grâce à la multiplicité des sous-ensembles presseurs, d'agir simultanément sur plusieurs rayons, de préférence sur l'ensemble des rayons, afin de réaliser un assemblage, et notamment un assemblage par collage, dans un temps très court, typiquement en une seule étape, tout en bénéficiant néanmoins d'une gestion individuelle des poussoirs, du fait que la course axiale de chaque poinçon, et donc du ou des poussoirs actionnés par ledit poinçon, peut être ajustée et contrôlée individuellement.

Avantageusement, un tel agencement permet notamment d'associer facilement un ressort de suspension à chaque poinçon, en interposant axialement ledit ressort de suspension entre le système d'entraînement et le poinçon, de sorte à pouvoir conférer au poinçon une souplesse apparente qui permet au sous-ensemble presseur d'ajuster l'effort axial exercé par le système d'entraînement sur le poinçon, ainsi que la course axiale du poinçon relativement au poussoir, et par conséquent d'ajuster l'intensité de l'effort de serrage radial que la rampe du poinçon développe, par conversion de mouvement, à l'encontre du poussoir et du pied du rayon qui repose contre la face réceptrice.

Ainsi, chaque sous-ensemble presseur est capable de s'adapter à la configuration propre de chaque poussoir et de chaque pied, liée notamment aux tolérances dimensionnelles de fabrication de ces pièces.

En outre, l'utilisation d'un poinçon selon l'invention permet de placer l'organe d'appui axialement à distance axiale du système d'entraînement, et donc d'installer ledit système d'entraînement dans une région de l'espace qui n'interfère pas avec celle occupée par le poussoir et le rayon.

On peut ainsi dimensionner le système de guidage et d'entraînement de sorte à garantir un entraînement précis, robuste et puissant des poussoirs, et ce tout en plaçant le point d'application de l'effort radial de serrage, que le poinçon exerce sur le poussoir, dans une aire de contact qui est sensiblement centrée axialement par rapport au pied du rayon à comprimer, et plus particulièrement en plaçant ledit point d'application de l'effort de serrage sensiblement au centre de la longueur axiale du poussoir, de sorte que d'une part on évite tout basculement accidentel et tout coincement du poussoir par arc-boutement lors du déplacement radial dudit poussoir, et que d'autre part ledit poussoir agit comme un répartiteur qui distribue de façon sensiblement homogène l'effort de serrage sur toute l'étendue axiale du pied du rayon, ce qui garantit une bonne qualité de fixation.

De surcroît, l'invention permet de réaliser des sous-ensembles presseurs compacts, constitués d'un petit nombre de pièces, et qui sont donc particulièrement robustes et fiables.

La relative simplicité de la structure du dispositif d'assemblage selon l'invention, et donc sa relative légèreté, permet enfin de limiter l'inertie thermique dudit dispositif, ce qui améliore le temps de cycle lorsque ledit cycle comprend, pendant que les poussoirs maintiennent les pieds des rayons plaqués contre le moyeu et/ou contre la bande annulaire périphérique, une phase de chauffage destinée à sceller, par collage, les rayons au moyeu et à la bande annulaire périphérique.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 est une vue en perspective d'un bandage sans air assemblé par un dispositif selon l'invention.
La figure 2 illustre, selon une vue en perspective, un rayon du bandage de la figure 1.
La figure 3 représente, selon une vue en perspective avec coupe dans un plan radial contenant l'axe central, un dispositif d'assemblage selon l'invention.
La figure 4 représente, selon une vue en perspective, un sous-ensemble presseur utilisé au sein du dispositif de la figure 3.
La figure 5 est une vue en projection de face du sous-ensemble presseur de la figure 4.
La figure 6 représente, selon une vue en coupe de dessus, dans un plan de coupe normal à l'axe central, la coopération entre le sous-ensemble presseur de la figure 4 et le rayon qui est soumis à l'action dudit sous-ensemble.
La figure 7 représente, selon une vue en perspective avec une vue partielle agrandie, le détail d'un couple de poussoirs utilisés par chacun des sous-ensembles presseurs présents sur les figures 3 et 4.
La figure 8 représente, selon une vue de détail en coupe dans un plan radial contenant l'axe central, l'interaction entre le poinçon et le couple de poussoirs de la figure 7.
Les figures 9A, 9B et 9C représentent, selon des vues en coupe dans un plan radial contenant l'axe central, des étapes successives d'enfoncement axial du poinçon et par conséquent d'écartement radial progressif des poussoirs représentés sur les figures 7 et 8, la figure 9A correspondant à une configuration rétractée dans laquelle l'écartement des poussoirs est minimal, la figure 9B à une configuration semi-déployée définissant un écartement intermédiaire des poussoirs, et la figure 9C correspondant à une configuration totalement déployée définissant l'écartement maximal des poussoirs.
La figure 10 est une vue d'ensemble en perspective d'une variante de dispositif d'assemblage selon l'invention.
La figure 11 est une vue en coupe, dans un plan radial contenant l'axe central, du dispositif de la figure 10.
La figure 12 est une vue en perspective du dispositif des figures 10 et 11 dont on a ôté la partie supérieure du système d'entraînement pour faire apparaître d'une part le plateau d'actionnement qui permet d'enfoncer axialement les poinçons afin d'écarter les poussoirs, et d'autre part les verrous destinés à maintenir passivement ledit plateau d'actionnement, et donc les poinçons en position enfoncée, pendant l'opération de cuisson, lesdits verrous étant ici en configuration dégagée.
La figure 13 illustre, selon la même vue que la figure 12, le dispositif de la figure 12 une fois que les verrous sont engagés pour retenir le plateau et ainsi bloquer les poinçons en position enfoncée, et donc les poussoirs en position écartée, et par conséquent les pieds des rayons plaqués contre leurs faces réceptrices respectives.

La présente invention concerne un dispositif 1 d'assemblage destiné à la fabrication d'un bandage 2.

Ledit bandage 2 est destiné à équiper une roue de véhicule.

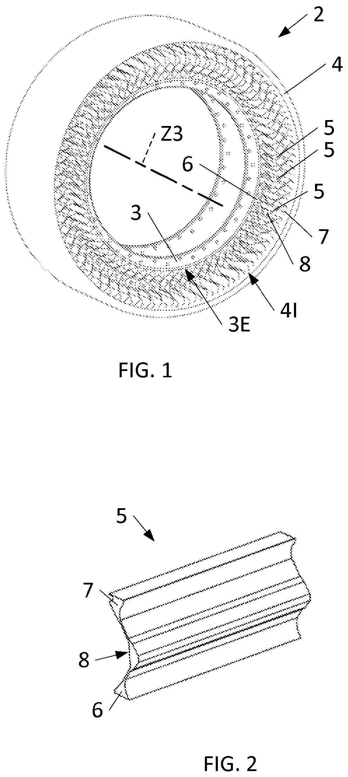

Ledit bandage 2 comprend un moyeu 3 présentant un axe central Z3, une bande annulaire périphérique 4 coaxiale au moyeu 3, et une pluralité de rayons 5 qui relient le moyeu 3 à la bande annulaire périphérique 4, tel que cela est illustré sur la figure 1.

Les rayons 5 permettent avantageusement de soutenir mécaniquement la bande annulaire périphérique 4 par rapport au moyeu 3, sans qu'il soit nécessaire de prévoir une chambre pneumatique qui serait destinée à recevoir un gaz de gonflage sous pression. Le bandage 2 est ainsi de préférence un bandage dit « sans air ».

La « bande annulaire périphérique » 4 désigne ici, de façon très générique, la structure annulaire du bandage 2 qui est portée par les rayons 5 et qui forme la bande de roulement destinée à venir au contact de la route. Ladite bande annulaire périphérique 4 peut ainsi, de façon connue en soi, présenter de préférence une structure stratifiée qui comprend une couronne d'armature radialement interne, contenant une ou plusieurs couches contenant des fils de renfort ou des fibres de renfort noyés dans une résine et/ou dans un matériau à base de caoutchouc, puis une couche radialement externe qui contient un ou plusieurs matériaux à base de caoutchouc et qui forme la bande de roulement du bandage 2.

Le moyeu 3 est un anneau rigide, voire semi-rigide, de forme circulaire, par exemple en alliage métallique ou en matériau composite, qui peut être conçu pour être monté sur une jante, ou bien pour former lui-même une jante apte à être montée directement sur un essieu ou un arbre de roue de véhicule.

Dans ce qui suit, les termes « axial » et « axialement » feront référence à des directions qui sont parallèles à l'axe central Z3, tandis que les termes « radial » et « radialement » font référence à des directions qui sont perpendiculaires audit axe central Z3.

Chacun des rayons 5 comprend, tel que cela est visible sur les figures 1 et 2, un premier pied 6 qui est fixé sur une face radialement externe 3E du moyeu 3, qui forme une première face réceptrice 3E, et un second pied 7 qui est fixé sur une face radialement interne 4I de la bande annulaire périphérique 4 formant une seconde face réceptrice 4I.

La face radialement externe 3E du moyeu 3, qui forme la première face réceptrice 3E, est ici une face cylindrique convexe de base circulaire centrée sur l'axe central Z3.

De même, la face radialement interne 4I de la bande annulaire périphérique 4 formant la seconde face réceptrice 4I est ici une face cylindrique concave de base circulaire centrée sur l'axe central Z3.

Le diamètre de la première face réceptrice 3E appartenant au moyeu 3 est bien entendu strictement inférieur au diamètre de la seconde face réceptrice 4I appartenant à la bande annulaire périphérique 4, la différence étant comblée par les rayons 5.

Le diamètre du moyeu 3, et plus particulièrement le diamètre de la face radialement externe 3E dudit moyeu 3 sur laquelle les rayons 5 prennent appui, pourra être compris entre 30 cm et 60 cm.

Le diamètre externe hors-tout de la bande annulaire périphérique 4 pourra quant à lui être compris entre 50 cm et 90 cm, et la largeur hors-tout de ladite bande annulaire périphérique, considérée le long de l'axe central Z3, comprise entre 100 mm et 400 mm.

Plus préférentiellement, le moyeu 3 pourra former une jante ou être monté sur une jante qui présentera des dimensions qui correspondent aux tailles normalisées des jantes de 12 pouces à 24 pouces utilisées pour les bandages pneumatiques usuels. De même, le bandage 2 pourra, plus globalement, présenter des dimensions, et notamment un diamètre hors-tout et une largeur axiale, qui correspondent aux tailles normalisées des bandages pneumatiques adaptés aux jantes de dimensions normalisées susmentionnées.

Les rayons 5, et plus particulièrement les pieds 6, 7 de ceux-ci, sont de préférence réalisés dans un matériau à base de caoutchouc. Les rayons contiennent de préférence également des éléments de renfort, à base de fils de renfort ou de structures composites comprenant des fibres de renfort, afin d'assurer la tenue mécanique desdits rayons 5 vis-à-vis de la compression radiale.

De préférence, tel que cela est visible sur la figure 2, le premier pied 6 du rayon 5 est relié au second pied 7 du rayon par une portion centrale 8 du rayon, en forme de V, afin de conférer au rayon 5 une flexibilité maîtrisée qui permet audit rayon 5 d'accommoder élastiquement les déformations du bandage 2 lors du roulage et d'assurer une certaine suspension élastique amortie du moyeu 3, et donc du véhicule, par rapport à la bande annulaire périphérique 4. Ceci permet notamment de procurer un certain confort de roulage, qui peut être proche de celui obtenu avec des bandages pneumatiques usuels.

Selon l'invention, le dispositif d'assemblage 1 comprend une pluralité de sous-ensembles presseurs 10 qui sont affectés chacun à la fixation d'un rayon 5 distinct.

De préférence, le dispositif d'assemblage 1 comprend autant de sous-ensembles presseurs 10 répartis autour de l'axe central Z3 qu'il y a de rayons 5 au sein du bandage 2.

Ainsi, on pourra fixer simultanément tous les rayons 5 au moyeu 3, et/ou respectivement fixer simultanément tous les rayons 5 à la bande annulaire périphérique 4, en une seule étape de fabrication, ce qui minimisera le temps de cycle de fabrication, et ce tout en profitant malgré tout d'une gestion individualisée de chaque rayon 5.

Les rayons 5, et par conséquent les sous-ensembles presseurs 10 associés, seront de préférence équirépartis en azimut autour de l'axe central Z3.

Par volonté de standardisation, les rayons 5 seront de préférence tous identiques les uns aux autres.

Il en ira de préférence de même pour les sous-ensembles presseurs 10, qui seront dupliqués à l'identique les uns des autres de sorte à former des modules interchangeables entre eux.

A titre indicatif, on pourra prévoir entre 30 et 80 rayons 5, par exemple 64 rayons, et donc autant de sous-ensembles presseurs 10, notamment pour un moyeu 3 dont le diamètre correspond à celui d'une jante de 12 pouces à 24 pouces.

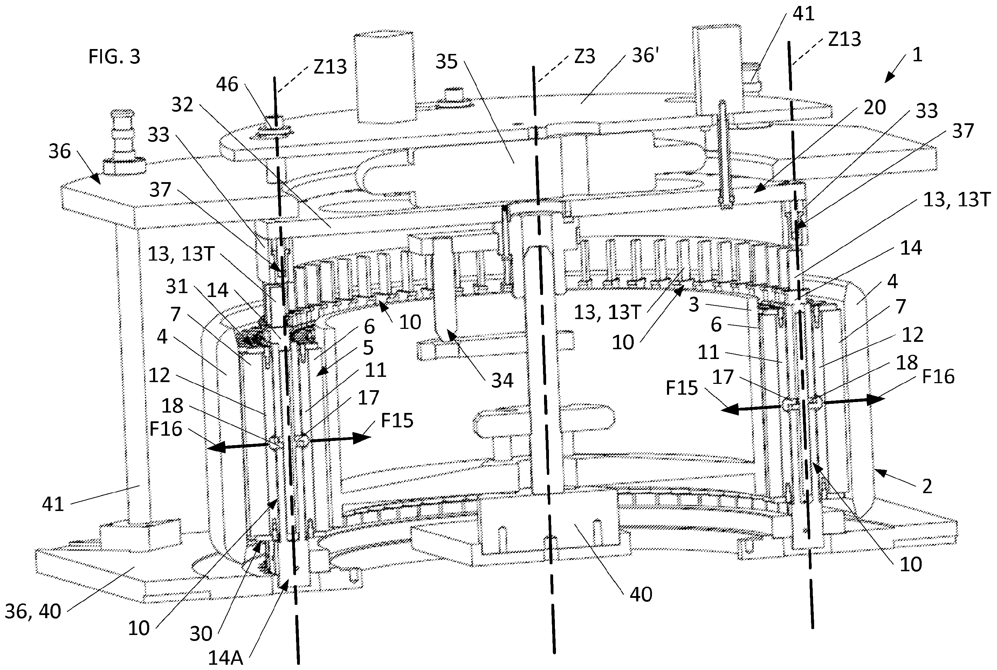

Tel que cela est notamment visible sur les figures 3, 4 et 5, les sous-ensembles presseurs 10 comportent chacun au moins un poussoir 11, 12 agencé pour presser l'un des premier et second pieds 6, 7 du rayon 5 concerné contre la face réceptrice 3E, 4I du moyeu 3 ou respectivement de la bande annulaire périphérique 4 qui correspond audit pied 6, 7 du rayon 5.

Les poussoirs 11, 12 sont de préférence formés par des barres rigides rectilignes, de préférence métalliques.

Lesdits poussoirs 11, 12 s'étendent de préférence parallèlement à l'axe central Z3, sur une longueur préférentiellement au moins égale à 30%, de préférence au moins égale à 50%, voire à 70% de la longueur axiale des pieds 6, 7, afin d'avoir une bonne assise contre lesdits pieds 6, 7.

De préférence, la longueur axiale de chaque poussoir 11, 12, et plus particulièrement la longueur axiale du premier poussoir 11, radialement interne, n'excédera pas la longueur axiale du pied 6, 7 correspondant. Ceci permettra d'éviter toute interférence entre le poussoir 11, 12 et la face réceptrice 3E, 4I correspondante, notamment ici entre le premier poussoir 11 et la face réceptrice 3E du moyeu 3. Ceci permettra également de rendre un même ensemble presseur 10, et plus globalement un même dispositif 1, compatible avec l'assemblage de plusieurs dimensions de rayons 5, et plus globalement avec l'assemblage de plusieurs dimensions axiales de bandages 2.

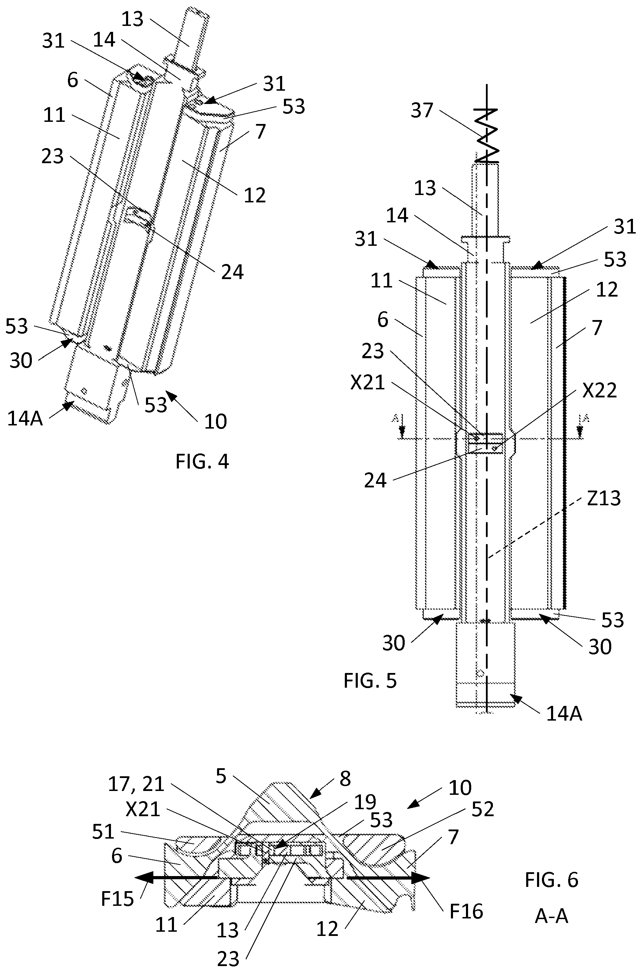

Les poussoirs 11, 12 présenteront de préférence une section transverse de forme conjuguée à celle des pieds 6, 7 correspondants, ici par exemple une section sensiblement triangulaire dont l'un des côtés épouse la pente de la branche de la portion centrale 8 en V du rayon 5 ainsi que la face du pied qui forme le prolongement de ladite pente, tel que cela est visible sur la figure 6.

Tel que cela est visible sur les figures 4 à 6, chaque poussoir 11, 12 pourra avantageusement être associé à une bride 51, 52, qui est retenue audit poussoir 11, 12 par un ou plusieurs connecteurs 53, et qui permet ainsi au poussoir 11, 12 d'assurer une prise sur le pied 6, 7 de chaque côté de la branche qui rattache ledit pied à la portion centrale 8 du rayon 5, de sorte à éviter tout basculement ou toute perte de contrôle de la trajectoire du pied 6, 7 lors du déplacement radial du poussoir 11, 12.

Selon l'invention, chacun des sous-ensembles presseurs 10 comprend un poinçon 13 qui est monté mobile selon une direction axiale Z13 parallèle à l'axe central Z3, sous la dépendance d'un système d'entraînement 20.

Tel que cela est visible sur les figures 3, 4, 5 et 9A à 9C, ledit poinçon 13 est de préférence guidé en translation axiale, selon la direction axiale Z13, au moyen d'un fourreau 14 dans lequel coulisse ledit poinçon 13. Le guidage coulissant du poinçon 13 pourra être assuré par tout moyen approprié, notamment par glissement sur des patins à faible frottement, ou par roulement sur des galets. Une extrémité 14A dudit fourreau 14 peut avantageusement former une base de fixation permettant de positionner et fixer ledit fourreau 14, et plus globalement le sous-ensemble presseur 10 correspondant, au sein du dispositif 1 d'assemblage.

Le poinçon 13 se présente de préférence sous forme d'une tige ou d'une lame, rigide, de préférence en matériau métallique, ou en matériau composite tel que par exemple un composite à base de fibres de carbone imprégnées d'une résine, dont la direction longitudinale coïncide avec la direction axiale Z13.

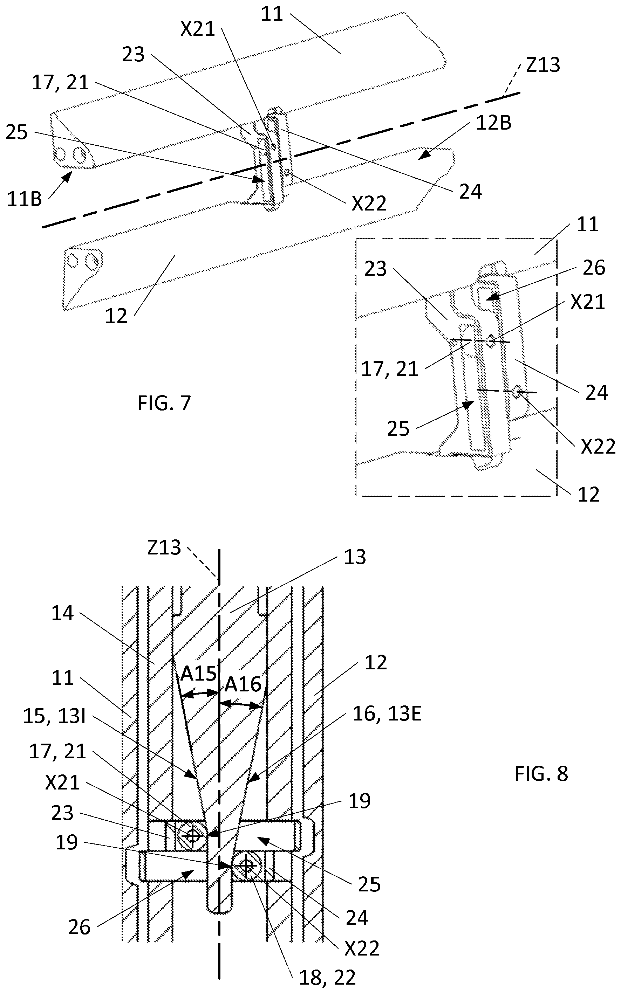

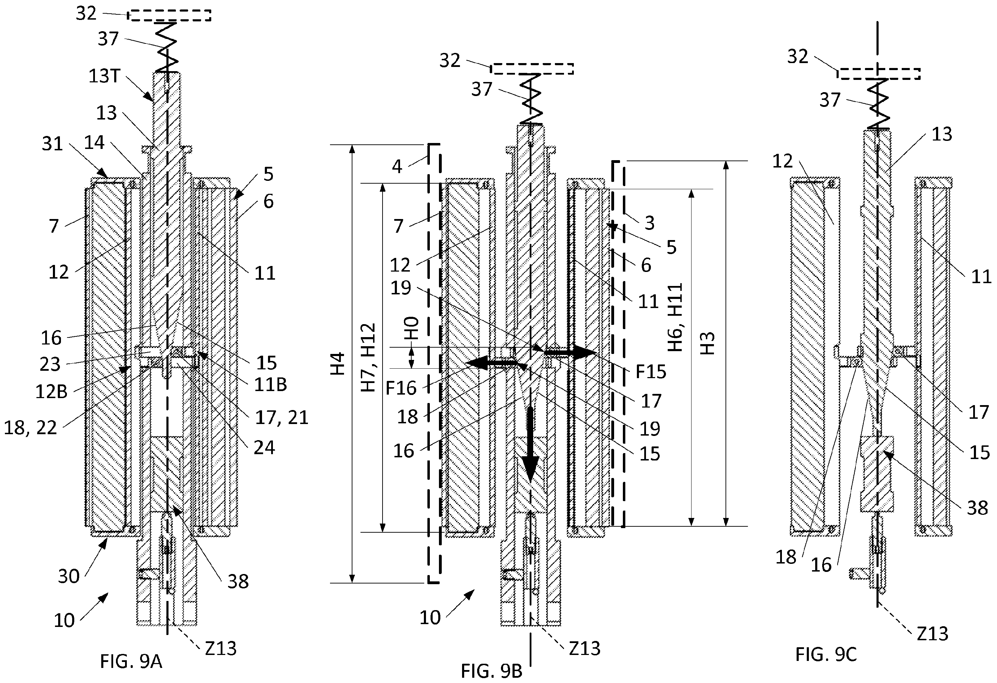

Selon l'invention, le poinçon 13 présente, tel que cela est bien visible sur les figures 8, 9A, 9B et 9C, au moins une rampe 15, 16 qui, dans un plan radial contenant l'axe central Z3, dévie progressivement de la direction axiale Z13, et qui coopère avec un organe d'appui 17, 18 solidaire du poussoir 11, 12, de sorte que, lorsque le système d'entraînement 20 déplace axialement le poinçon 13 à l'encontre de l'organe d'appui 17, 18, la rampe 15, 16 provoque un déplacement radial dudit organe d'appui 17, 18, et par conséquent un déplacement radial du poussoir 11, 12, et génère ainsi, par l'intermédiaire de l'organe d'appui 17, 18, un effort de serrage F15, F16 qui presse radialement ledit poussoir 11, 12, et par conséquent le pied 6, 7 du rayon 5, à l'encontre de la face réceptrice 3E, 4I.

La rampe 15, 16 peut présenter tout profil adapté, qui permettra au poinçon 13 de forcer, lors de sa progression axiale, un écartement radial progressif du poussoir 11, 12. Ledit profil pourra ainsi être par exemple un profil incurvé ou, comme c'est le cas sur la figure 8, un profil rectiligne incliné.

L'angle d'inclinaison A15, A16 formé, dans le plan radial concerné, entre la tangente au profil de la rampe 15, 16 et la direction axiale Z13, et donc plus globalement entre la tangente au profil de la rampe 15, 16 et la direction de l'axe central Z3, sera non nul et de préférence compris entre 3 degrés et 40 degrés, voire entre 3 degrés et 60 degrés.

L'organe d'appui 17, 18 embarqué sur le poussoir 11, 12 pourra prendre toute forme adaptée pour coopérer avec la rampe 15, 16 du poinçon 13.

Ainsi, par exemple, l'organe d'appui 17, 18 pourra être formé par un doigt fixé sur le poussoir, ledit doigt possédant de préférence une surface de contact incurvée, préférentiellement circulaire, ou bien par une contre-rampe de forme et d'orientation sensiblement conjuguées à la forme et à l'orientation de la rampe 15, 16 du poinçon, de sorte que ledit organe d'appui 17, 18 coopère avec la rampe 15, 16 du poinçon 13 par glissement.

Toutefois, selon une variante de réalisation préférentielle, et tel que cela est visible sur les figures 7, 8 et 9A à 9C, l'organe d'appui 17, 18 est formé par un galet 21, 22 qui est monté en rotation sur un axe X21, X22 porté par le poussoir 11, 12 et orthoradial par rapport à l'axe central Z3, de sorte que ledit galet 21, 22 roule sur la rampe 15, 16 lorsque le poinçon 13 se déplace axialement.

Par « orthoradiale », on désigne une direction qui est à la fois perpendiculaire à un rayon (géométrique) issu de l'axe central Z3 et contenue dans un plan normal audit axe central Z3.

Un tel agencement à galet 21, 22 minimise l'usure du mécanisme à rampe 15, 16 et garantit un fonctionnement sans heurt du sous-ensemble presseur 10 lorsque la rampe 15, 16 convertit le mouvement axial du poinçon 13 en mouvement radial du poussoir 11, 12.

De préférence, tel que cela est bien visible sur les figures 7 et 8, le poussoir 11, 12 possède un canon de guidage 23, 24 qui délimite une fente de passage 25, 26, à l'intérieur de laquelle le poinçon 13 s'enfonce lors de son déplacement axial et dont la paroi interne présente l'organe appui 17, 18.

Avantageusement, le canon de guidage 23, 24 procure une connexion robuste du poinçon 13 au poussoir 11, 12, et améliore la précision du guidage dudit poinçon 13.

Le canon de guidage 23, 24 pourra se présenter sous forme d'une patte qui fait saillie radialement au dos 11B, 12B du poussoir 11, 12, de préférence d'un seul tenant avec ledit poussoir 11, 12, et qui présente une fente de passage 25, 26 oblongue qui permet au poinçon 13 de traverser ledit canon de guidage 23, 24, en coulissant avec jeu à l'intérieur dudit canon de guidage 23, 24, dont le poinçon 13 reste avantageusement captif.

De préférence, l'organe d'appui 17, 18 est agencé de manière à ce que l'aire de contact 19 entre la rampe 15, 16 et l'organe d'appui 17, 18 d'une part se situe au dos 11B, 12B du poussoir 11, 12, à l'opposé radialement du pied 6, 7 et de la face réceptrice 3E, 4I, et d'autre part est contenue dans la plage axiale H6, H7 que vient occuper le pied 6, 7 concerné le long de l'axe central Z3.

Par « plage axiale » ou « étendue axiale » d'un élément, ici par exemple la plage axiale H6, H7 du pied 6, 7 du rayon 5, on désigne l'étendue comprise, le long de l'axe central Z3, entre deux plans fictifs qui sont normaux audit axe central Z3 et qui viennent tangenter les extrémités axiales de l'élément considéré. De manière équivalente, la « plage axiale » désigne ainsi le segment de l'axe central Z3 qui correspond à la projection orthogonale de l'élément concerné sur ledit axe central Z3.

Par « dos » 11B, 12B du poussoir 11, 12, on désigne une face du poussoir qui se situe radialement à l'opposé de la face « avant » dudit poussoir 11, 12 par laquelle ledit poussoir 11, 12 appuie contre le pied 6, 7 et peut ainsi comprimer le pied 6, 7 contre la face réceptrice 3E, 4I.

On notera que, pour prendre une bonne assise sur le moyeu 3 et pour soutenir efficacement la bande annulaire périphérique 4, les rayons 5, et plus particulièrement les pieds 6, 7 desdits rayons 5, présenteront de préférence une étendue axiale H6, H7 qui représente entre 70 % et 105 % de l'étendue axiale H3 du moyeu 3, et/ou, alternativement ou cumulativement avec le critère précédent, entre 70 % et 100 % de l'étendue axiale H4 de la bande annulaire périphérique 4.

Avantageusement, dans la mesure où l'organe d'appui 17, 18 du levier 15, 16 agit au dos 11B, 12B du poussoir 11, 12 dans une position axiale qui se situe en vis-à-vis de la plage axiale H6, H7 occupée par le pied 6, 7 du rayon, et plus préférentiellement dans la mesure où l'organe d'appui 17, 18 du levier 15, 16 agit au dos 11B, 12B du poussoir dans une position axiale qui est sensiblement centrée sur la plage axiale H6, H7 du pied 6, 7, alors le poussoir 11, 12 est particulièrement stable et l'effort de serrage F15, F16 bien réparti par ledit poussoir 11, 12 sur toute la plage axiale H6, H7 du pied 6, 7.

De préférence, l'aire de contact 19 qui existe entre la rampe 15, 16 du poinçon 13 et l'organe d'appui 17, 18 du poussoir 11, 12 est et reste strictement contenue dans une plage axiale H0 dite « plage axiale centrale » H0 qui est centrée sur la plage axiale H11, H12 occupée par le poussoir 11, 12, et dont l'étendue axiale représente moins de 40%, de préférence moins de 20%, voire moins de 15% de l'étendue de ladite plage axiale H11, H12 occupée par le poussoir 11, 12.

L'aire de contact 19 occupe ainsi une étendue axiale relativement réduite qui est, initialement, et reste, lors des mouvements axiaux du poinçon 13 et des mouvements radiaux du poussoir 11, 12 qui en résultent, contenue dans la plage axiale centrale H0. Par conséquent, et surtout, ladite aire de contact 19 est et reste sensiblement centrée sur la plage axiale H11, H12 occupée par le poussoir 11, 12, et par conséquent est et reste sensiblement centrée sur la plage axiale H6, H7 qui sera occupée par le pied 6, 7 lorsque ledit poussoir 11, 12 agira sur le pied 6, 7 pour appliquer l'effort de serrage F15, F16.

En plaçant l'organe d'appui 17, 18 sensiblement au milieu du poussoir 11, 12, c'est-à-dire sensiblement à la moitié de la longueur dudit poussoir 11, 12, et donc en appliquant l'effort de serrage F15, F16 sensiblement au milieu du poussoir 11, 12, le mécanisme de conversion formé par la rampe 15, 16 et l'organe d'appui 17, 18 permet de contraindre le poussoir 11, 12, et donc le pied 6, 7 du rayon, de façon relativement équilibrée, et permet donc de déplacer radialement le poussoir 11, 12 sans causer de basculement prononcé dudit poussoir 11, 12 par rapport à l'axe central Z3 ni de blocage par arc-boutement dudit poussoir 11, 12.

De préférence, le poussoir 11, 12 est guidé radialement par un premier guide 30 situé à une première extrémité axiale dudit poussoir 11, 12 et par un second guide 31 distinct du premier guide 30 et situé à une seconde extrémité axiale dudit poussoir 11, 12 opposée à la première extrémité, de sorte que l'aire de contact 19 entre la rampe 15, 16 du poinçon 13 et l'organe d'appui 17,18 du poussoir 11, 12 se situe entre lesdits premier et second guides 30, 31, à distance desdits guides 30, 31, de préférence à équidistance desdits guides 30, 31.

Avantageusement, un tel guidage double, par des guides 30, 31 qui se situent axialement de part et d'autre de l'aire de contact 19, et donc de part et d'autre du point d'application de l'effort de serrage F15, F16 au niveau duquel la rampe 15, 16 du poinçon 13 exerce, via l'organe d'appui 17, 18, son action sur le poussoir 11, 12, procure avantageusement un guidage précis et stable qui évite tout basculement et tout coincement du poussoir 11, 12 par arc-boutement lors des déplacements radiaux dudit poussoir 11, 12, bien que l'effort fourni par la rampe 15, 16 soit localisé dans une aire de contact 19 relativement étroite.

A titre d'exemple, le premier guide 30 et le second guide 31 pourront comprendre des doigts qui font saillie axialement aux extrémités du poussoir 11, 12, plus particulièrement des doigts qui font saillie axialement sur les connecteurs 53 qui assurent la fixation des brides 51, 52 sur les poussoirs 11, 12, lesdits doigts étant alors guidés dans des rainures sensiblement radiales prévues dans des premier et second plateaux annulaires qui sont centrés sur l'axe central Z3 et qui s'étendent selon des plans normaux à l'axe central Z3, de part et d'autre axialement des poussoirs 11, 12.

De préférence, un ressort de suspension 37 est interposé axialement entre chaque poinçon 13 et le système d'entraînement 20 de sorte à procurer au poinçon 13 une souplesse prédéterminée à l'encontre de la résistance que le poussoir 11, 12 oppose audit poinçon 13 en réaction à l'effort de serrage F15, F16.

Avantageusement, la déformation élastique du ressort de suspension 37 permet d'adapter et notamment de limiter l'enfoncement axial du poinçon 13, et par conséquent l'intensité de l'effort radial de serrage F15, F16 développé à l'encontre du poussoir 11, 12 et du pied 6, 7 du rayon 5, en fonction de la position et des tolérances dimensionnelles de ces pièces mobiles, et en fonction du comportement desdites pièces et en particulier de la résistance rencontrée.

La raideur du ressort de suspension 37 sera bien entendu choisie en conséquence.

Le ressort de suspension 37 pourra en outre être précontraint par un organe de tarage tel qu'une vis de réglage ou une cale d'épaisseur choisie.

De préférence, le ressort de suspension 37 est agencé pour être sollicité en compression, tant par commodité de construction que pour garantir la robustesse du mécanisme de suspension.

Avantageusement, la souplesse procurée par le ressort de suspension 37 permet au poinçon 13 d'adapter au cas par cas son déplacement axial, et permet donc de réguler le déplacement radial du poussoir 11, 12 ainsi que l'intensité de l'effort de serrage F15, F16 que ledit poussoir 11, 12 applique au pied 6, 7 du rayon.

On s'assure ainsi notamment que le pied 6, 7 de chacun des rayons 5, qui se retrouve pris et comprimé radialement entre le poussoir 11, 12 et la face réceptrice 3E, 4I, est convenablement positionné et qu'il est soumis à un effort de serrage F15, F16 qui est suffisamment élevé pour garantir une bonne adhésion dudit pied 6, 7 sur la face réceptrice 3E, 4I, mais sans pour autant dépasser un seuil d'intensité qui serait dommageable au rayon 5 ou à ladite face réceptrice 3E, 4I.

Le ressort de suspension 37 pourra prendre toute forme adaptée à la fonction de suspension visée, par exemple la forme d'un ressort solide, tel qu'un ressort hélicoïdal ou un empilement de rondelles élastiques, ou bien encore la forme d'un ressort pneumatique.

De préférence, au moins une partie des sous-ensembles presseurs 10, et de préférence la totalité des sous-ensembles presseurs 10, comprennent chacun un poinçon 13 qui est pourvu d'une première rampe 15 agencée pour venir en prise avec un premier organe d'appui 17 porté par un premier poussoir 11 conçu pour presser le premier pied 6 du rayon 5 concerné contre le moyeu 3, et d'une seconde rampe 16 agencée pour venir en prise avec un second organe d'appui 18 porté par un second poussoir 12 conçu pour presser le second pied 7 dudit rayon 5 contre la bande annulaire périphérique 4.

Ainsi, chaque sous-ensemble presseur 10 comprend de préférence une paire de poussoirs 11, 12 antagonistes, pour pouvoir gérer les deux pieds 6, 7 d'un même rayon 5, c'est-à-dire la totalité des pieds 6, 7 d'un même rayon 5, et pouvoir ainsi assurer la fixation du rayon 5 aussi bien au moyeu 3 qu'à la bande annulaire périphérique 4.

Ceci procure une grande stabilité et une bonne efficacité aux sous-ensembles presseurs 10, et plus globalement au dispositif 1.

De préférence, chaque sous-ensemble presseur 10 comprendra un unique poinçon 13, qui sera avantageusement partagé par les deux poussoirs 11, 12 du sous-ensemble presseur 10, et qui comprendra donc à cet effet deux rampes 15, 16 dédiée chacune à l'un desdits poussoirs 11, 12.

Un tel choix permet notamment de réduire l'encombrement du sous-ensemble presseur 10, et de mieux contrôler l'ordre et l'amplitude des déplacements radiaux respectifs du premier poussoir 11 et du second poussoir 12 l'un par rapport à l'autre.

De préférence, tel que cela est visible notamment sur la figure 8, les rampes 15, 16 sont formées sur deux chants 13I, 13E du poinçon 13 radialement opposés l'un à l'autre, de sorte que ledit poinçon 13 forme une pointe qui, par effet de coin, vient, au fur et à mesure de la progression axiale du poinçon par rapport au poussoirs 11, 12 qui sont axialement fixes, écarter radialement les poussoirs 11, 12 l'un de l'autre.

Selon une possibilité de réalisation préférentielle, chacun des premier et second poussoirs 11, 12 possède un canon de guidage 23, 24, et les fentes de passage 25, 26 correspondantes sont alignées axialement de sorte à pouvoir être traversées simultanément par le poinçon 13, tel que cela est visible sur les figures 7 et 8.

Plus précisément, les premier et second canons de guidage 23, 24 pourront être superposés axialement l'un à l'autre, de préférence en appui glissant l'un sur l'autre, selon un agencement qui est particulièrement compact et permet de conserver lesdits canons de guidage, et donc les points d'appui 17, 18, sensiblement au milieu des poussoirs 11, 12.

Lorsque les fentes de passage 25, 26 sont ainsi alignées, les premier et second organes d'appui 17, 18, de préférence formés par un premier et un second galet 21, 22, peuvent alors de préférence être situés sur des portions radialement opposées des parois internes des première et seconde fente de passage 25, 26 de sorte à venir en appui respectivement contre la première rampe 15 et la seconde rampe 16 qui se situent quant à elles sur les chants 13I, 13E radialement opposés du poinçon 13.

Ici encore, cela favorise la compacité et la stabilité du mécanisme de conversion de mouvement, selon lequel un poinçon 13 en forme de pointe écarte l'un de l'autre, par effet de coin, les poussoirs 11, 12 antagonistes.

De préférence, les première et seconde rampes 15, 16 et les organes d'appui 17, 18 sont agencés de sorte que le système d'entraînement 20 génère un déplacement simultané du premier poussoir 11 et du second poussoir 12 à l'encontre respectivement du premier pied 6 du rayon 5 et du second pied 7 du rayon 5.

Un déplacement synchrone permet notamment de réaliser la fixation des deux pieds 6, 7 en une seule étape, ce qui permet de minimiser le temps de cycle de fabrication du bandage 2.

Un tel déplacement synchrone permet en outre d'équilibrer les efforts de traction, respectivement centripète et centrifuge, qui résultent de l'application des efforts de serrage F15, F16 et qui provoquent une extension radiale en traction du rayon 5 notamment par déflexion élastique de la portion centrale 8 dudit rayon 5. Cet équilibrage des efforts de traction permet d'éviter un défaut d'alignement radial du rayon 5.

On notera que lorsque le premier organe d'appui 17 et le second organe d'appui 18 sont décalés axialement l'un par rapport à l'autre, notamment en raison de la superposition axiale des canons de guidage 23, 24, alors on pourra prévoir un décalage axial identique entre la première rampe 15 et la seconde rampe 16, comme cela est visible sur les figures 8 et 9A, de sorte que l'engagement de la première rampe 15 sur le premier organe d'appui 17 s'opère simultanément à l'engagement de la seconde rampe 16 sur le second organe d'appui 18, et que l'écartement des poussoirs 11, 12 s'effectue ensuite de façon sensiblement synchrone, et de préférence de façon égale en amplitude radiale, au fur et à mesure que le poinçon poursuit sa progression axiale (ici vers le bas sur les figures 9A, 9B et 9C, et comme indiqué par la flèche correspondante sur la figure 9B).

Dans certaines circonstances, un déplacement séparé des poussoirs 11, 12 dans le temps peut toutefois être préférable. Cela pourra par exemple être le cas lorsque les deux pieds 6, 7 d'un même rayon 5 présentent une géométrie et/ou une raideur nettement différente l'un de l'autre et nécessitent donc une précharge différente pour arriver dans de bonnes conditions à leur point de contact avec leur face réceptrice 3E, 4I respective.

On pourra alors par exemple déphaser axialement les rampes 15, 16 en conséquence.

De préférence, préalablement au déplacement du poinçon 13, et donc préalablement au déplacement des poussoirs 11, 12, on pourra enduire de colle, par exemple d'une colle polyuréthane bi-composant, la face réceptrice 3E du moyeu 3, respectivement la face réceptrice 4I de la bande annulaire périphérique 4, avant de presser les pieds 6, 7 contre lesdites faces réceptrices. On pourra alors procéder ensuite, tout en conservant la contrainte de compression radiale desdits pieds 6, 7 contre lesdites faces réceptrices 3E, 4I, à une opération de cuisson pour polymériser la colle.

Avantageusement, la mise en joint des deux pieds 6, 7 avec leurs faces réceptrices 3E, 4I encollées respectives, au cours d'une même opération de déploiement, et ce que cette opération de déploiement soit synchrone ou déphasée, permettra ensuite de réaliser une seule étape de cuisson au lieu de deux étapes de cuisson successives.

De préférence, le dispositif d'assemblage 1 comprend un système d'entraînement 20 partagé, commun à plusieurs des sous-ensembles presseurs 10, et de préférence commun à tous les sous-ensembles presseurs 10.

De préférence, ledit système d'entraînement 20 partagé comprend à cet effet un plateau d'actionnement 32 qui est monté mobile en translation axiale le long de l'axe central Z3, et qui possède une série de culasses 33 réparties autour de l'axe central Z3 et agencées pour engager chacune la queue 13T d'un poinçon 13 de sorte à pouvoir exercer une poussée axiale sur ledit poinçon 13.

Chaque culasse 33 contient de préférence un ressort de suspension 37 tel que décrit plus haut, préférentiellement interposé en compression entre le fond de ladite culasse 33 et la queue 13T du poinçon.

Le plateau d'actionnement 32 est de préférence normal à l'axe central Z3, et se présente préférentiellement sous la forme d'un disque.

Ledit plateau d'actionnement 32 est de préférence associé à un détrompeur 34 qui permet de repérer la position angulaire du plateau d'actionnement 32, et plus particulièrement de la série de culasses 33, en lacet autour de l'axe central Z3, par rapport aux différents sous-ensembles presseurs 10, afin de positionner convenablement le plateau d'actionnement 32 et les culasses 33 en vis-à-vis des différents poinçons 13.

Le système d'entraînement 20 comprendra de préférence un moteur qui permet de générer le déplacement axial du plateau d'actionnement 32, et donc des poinçons 13.

On notera que le plateau d'actionnement 32 permettra de déplacer simultanément toutes les culasses 33 selon un mouvement axial de même amplitude, et donc conférera à chaque poinçon 13 la même capacité de déplacement potentielle. Cette capacité de déplacement potentielle, identique pour tous les poinçons 13 et donc parfaitement contrôlée, sera ajustée localement et automatiquement au cas par cas, pour chaque poinçon 13, par l'action du ressort de suspension 37, en fonction du comportement du rayon 5 et des poussoirs 11, 12 du sous-ensemble presseur 10 concerné.

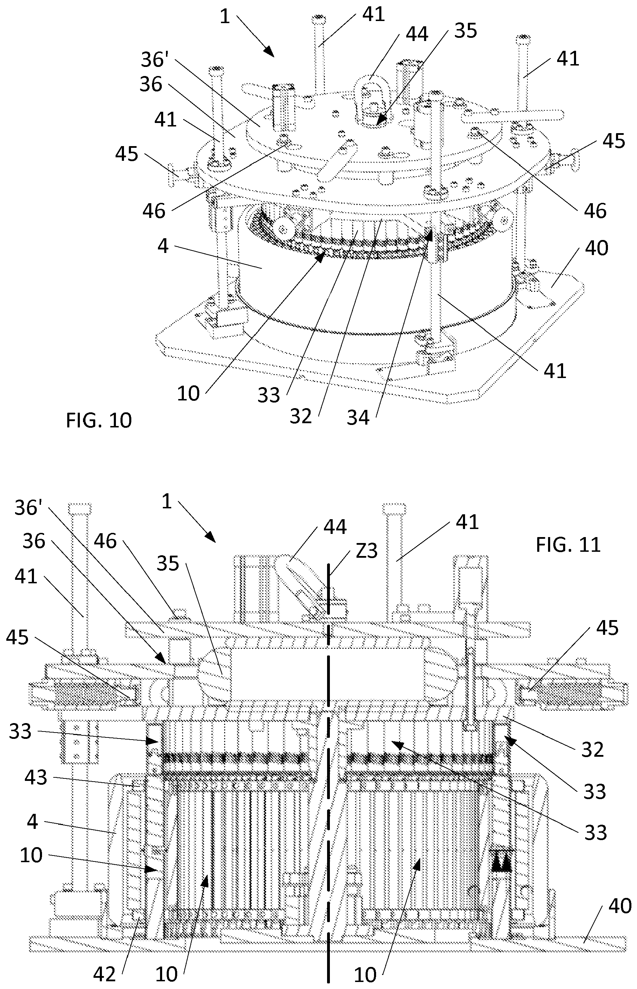

Selon une possibilité de réalisation, le moteur assurant le déplacement du plateau d'actionnement 32 sera formé par un vérin 35, de préférence un vérin 35 annulaire, interposé entre une portion 36' d'un bâti supérieur 36 fixe du dispositif d'assemblage 1, et le plateau d'actionnement 32 mobile, tel que cela est visible sur la figure 3 ou la figure 11.

Par ailleurs, chaque sous-ensemble presseur 10 possède de préférence un éjecteur 38 conçu pour pouvoir repousser le poinçon 13, en forçant un mouvement axial de recul dudit poinçon 13 (ici dans le sens vertical ascendant sur la figure 9C) afin de dégager les rampes 15, 16 des organes d'appui 17, 18 et ainsi permettre la rétractation radiale des poussoirs 11, 12 après que l'on a fixé les pieds 6, 7 du rayon au moyeu 3 et à la bande annuaire périphérique 4.

Ledit éjecteur 38 peut avantageusement former, à l'encontre du poinçon 13, et tel que cela est visible sur la figure 9C, une butée de fin de course axiale dans le sens du mouvement axial d'avance du poinçon 13 (ici un mouvement vertical descendant sur les figures 9B et 9C) qui permet au poinçon d'engager les rampes 15, 16 contre les organes d'appui 17, 18 et de déployer les poussoirs 11, 12.

L'éjecteur 38 pourra éventuellement être utilisé, en réglant convenablement la position axiale dudit éjecteur 38 à laquelle le poinçon 13 atteint ledit éjecteur 38, pour générer un contre-effort axial à l'encontre du poinçon 13 et donc du ressort de suspension 37, et ainsi affiner le déplacement axial du poinçon 13 et donc l'intensité des efforts de serrage F15, F16 radiaux développés.

De préférence, tel que cela est illustré sur la figure 3, le dispositif d'assemblage 1 sera agencé de manière à ce que l'axe central Z3 soit vertical.

Le dispositif d'assemblage 1 pourra alors comprendre une embase 40 qui porte le bâti supérieur 36 et qui forme un plateau sensiblement horizontal agencé pour recevoir le moyeu 3.

Des montants 41 verticaux seront fixés sur ladite embase 40, qui permettront notamment de fixer, au-dessus de l'embase 40 et parallèlement à ladite embase 40, tel que cela est notamment visible sur la figure 11, à un premier étage, un premier plateau annulaire 42 agencé pour recevoir la bande annulaire périphérique 4 et former les premiers guides 30 guidant les extrémités axiales inférieures des poussoirs 11, 12, lequel premier plateau annulaire 42 sera ajouré en son centre pour laisser disponible l'espace nécessaire au passage du moyeu 3, des rayons 5 et des sous-ensembles presseurs 10, puis, à un étage supérieur, un second plateau annulaire 43, agencé pour former les second guides 31 qui guident les extrémités axiales supérieures des poussoirs 11, 12.

Les montants 41 verticaux pourront également recevoir un troisième étage formant le bâti supérieur 36, dont une portion 36', de préférence amovible, sert de support fixe au vérin annulaire 35, tel que cela est visible sur les figures 3, 10 et 11.

On notera par ailleurs que l'utilisation de poinçons 13 permet avantageusement de déporter le système d'entraînement 20 axialement au-delà des poussoirs 11, 12, et des pieds 6, 7 des rayons 5, et de préférence de regrouper le système d'entraînement 20 d'un seul et même côté des poussoirs 11, 12, selon la direction axiale, ici ans la partie supérieure du dispositif 1 d'assemblage, du côté où les queues 13T de l'ensemble des poinçons 13 émergent axialement de leurs fourreaux 14 respectifs.

Le dispositif d'assemblage 1 présente ainsi un faible encombrement et une faible inertie thermique, tandis que le système d'entraînement 20 requiert un nombre relativement réduit de pièces et de moteurs (ici, même, un seul moteur suffit) pour animer la totalité des sous-ensembles presseurs 10.

On notera que, de préférence, le moteur, ici le vérin 35, est amovible, de sorte à pouvoir être retiré du dispositif 1 en vue de, et pendant, l'opération de cuisson. De préférence, plus globalement, le bloc formé par la portion 36' amovible du bâti supérieur 36 et par le vérin 35 est amovible, de sorte à pouvoir être retiré du dispositif 1 en vue de, et pendant, l'opération de cuisson. Ceci permet avantageusement de réduire la masse à chauffer, et donc l'inertie thermique du dispositif. Ceci permet également de ne pas soumettre le vérin 35 à des cycles thermiques qui pourraient provoquer son usure prématurée.

A cet effet, on pourra prévoir des fixations réversibles 46 entre d'une part la portion fixe du bâti supérieur 36, ici formée par un plateau qui est fixé aux montants 41, et d'autre part le bloc amovible formé par la portion 36' amovible dudit bâti supérieur 36 et le vérin 35.

On pourra avantageusement prévoir un anneau de levage 44 pour pouvoir soulever et manipuler le bloc amovible contenant le vérin 35, ou respectivement pour pouvoir soulever l'ensemble du dispositif 1, selon que les fixations réversibles 46 verrouillent le bloc amovible sur le reste du dispositif 1 ou au contraire libèrent le bloc amovible du reste du dispositif 1.

Selon une caractéristique préférentielle qui peut constituer une invention à part entière, le dispositif 1 pourra comporter un ou plusieurs verrous 45 agencés de manière à maintenir passivement les poinçons 13 dans une position enfoncée, après que le système d'entraînement 20 a déplacé axialement lesdits poinçons 13, de manière à maintenir les pieds 6, 7 des rayons 5 pressés contre leurs faces réceptrices 3E, 4I respectives.

L'engagement des verrous 45 permettra ainsi de maintenir les rayons 5 en place pour le collage après désactivation du système d'entraînement 20, et le cas échéant après enlèvement du système d'entraînement 20, ici après enlèvement du bloc supérieur comprenant le vérin 35 et la portion amovible 36' du bâti supérieur 36. On pourra ainsi procéder à la cuisson sans avoir à maintenir actif le système d'entraînement 20, et en ayant débarrassé temporairement le dispositif 1 de toute masse à chauffer superflue, ce qui permettra d'économiser du temps de cycle et de l'énergie.

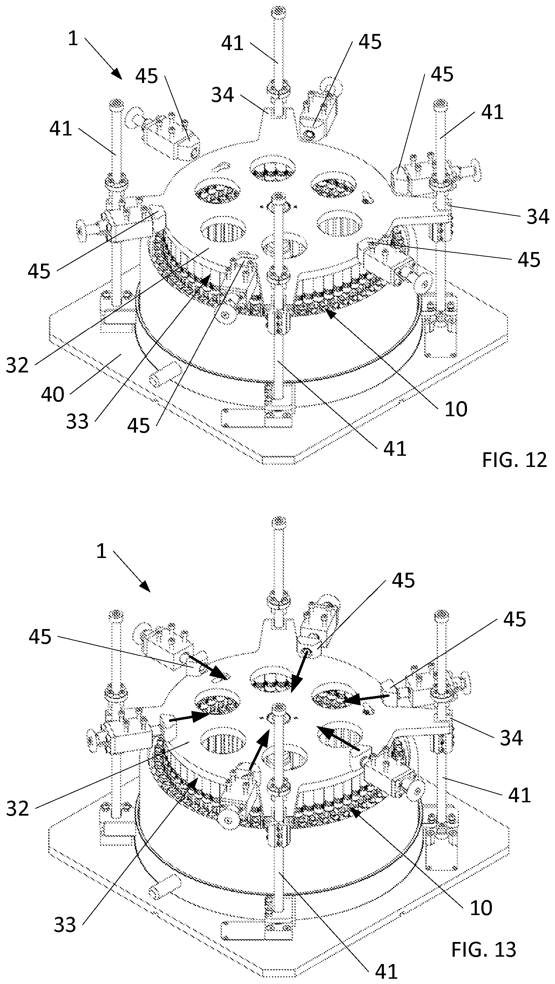

Les verrous 45 seront alternativement dégagés (figure 12), pour autoriser les mouvements axiaux du plateau d'actionnement 32, ici par rapport au bâti supérieur 36, puis engagés (figure 13) pour verrouiller le plateau d'actionnement 32 dans la position axiale assurant le maintien des pieds 6, 7 des rayons 5 contre les faces réceptrices 3E, 4I.

On pourra prévoir un enclenchement automatique des verrous 45, par exemple au moyen d'un ressort qui projette la clenche de chaque verrou contre le plateau d'actionnement 32, ici dans l'interstice axialement compris entre la portion fixe du bâti supérieur 36 et le plateau d'actionnement 32, sitôt que la position axiale voulue du plateau d'actionnement 32 est atteinte, et donc sitôt que les poinçons 13 pressent convenablement les pieds 6, 7 des rayons 5 contre les faces réceptrices 3E, 4I.

Les figures 10 à 13 représentent une seconde variante de réalisation du dispositif 1 qui reprend pour l'essentiel les caractéristiques et le fonctionnement décrits dans ce qui précède, et qui diffère notamment de la première variante de la figure 3 en ce que les détrompeurs 34 sont cette fois formés aux extrémités de branches en étoile du plateau d'actionnement 32, et coopèrent en coulissement axial avec les montants 41, au lieu d'être placés dans l'espace central du dispositif.

Cette seconde variante facilite notamment l'implantation des détrompeurs 34, ainsi que celle des verrous 45, lesquels verrous 45 peuvent notamment être fixés à la portion fixe du bâti supérieur 36 et comprendre des clenches à mouvement radial.

## Revendications

1. Dispositif (1) d'assemblage destiné à la fabrication d'un bandage (2) qui comprend un moyeu (3) présentant un axe central (Z3), une bande annulaire périphérique (4) coaxiale au moyeu (3), et une pluralité de rayons (5) qui relient le moyeu (3) à la bande annulaire périphérique (4) et qui comprennent à cet effet chacun un premier pied (6) fixé sur une face radialement externe (3E) dudit moyeu (3) formant une première face réceptrice (3E) et un second pied (7) fixé sur une face radialement interne (4I) de ladite bande annulaire périphérique (4) formant une seconde face réceptrice (4I), ledit dispositif d'assemblage (1) comprenant une pluralité de sous-ensembles presseurs (10) qui sont affectés chacun à la fixation d'un rayon (5) distinct et qui comportent chacun au moins un poussoir (11, 12) agencé pour presser l'un des premier et second pieds (6, 7) du rayon (5) concerné contre la face réceptrice (3E, 4I) du moyeu (3) ou respectivement de la bande annulaire périphérique (4) qui correspond audit pied (6, 7) du rayon, ledit dispositif d'assemblage étant **caractérisé en ce que** chacun desdits sous-ensembles presseurs (10) comprend un poinçon (13) qui est monté mobile selon une direction axiale (Z13) parallèle à l'axe central (Z3), sous la dépendance d'un système d'entraînement (20), et qui présente au moins une rampe (15, 16) qui, dans un plan radial contenant l'axe central (Z3), dévie progressivement de la direction axiale (Z13), et qui coopère avec un organe d'appui (17, 18) solidaire du poussoir (11, 12), de sorte que, lorsque le système d'entraînement (20) déplace axialement le poinçon (13) à l'encontre de l'organe d'appui (17, 18), la rampe (15, 16) provoque un déplacement radial dudit organe d'appui (17, 18) et par conséquent du poussoir (11, 12), et génère ainsi, par l'intermédiaire de l'organe d'appui (17, 18), un effort de serrage (F15, F16) qui presse radialement ledit poussoir (11, 12), et par conséquent le pied (6, 7) du rayon (5), à l'encontre de la face réceptrice (3E, 4I).

2. Dispositif selon la revendication 1 **caractérisé en ce qu'**un ressort de suspension (37) est interposé axialement entre chaque poinçon (13) et le système d'entraînement (20) de sorte à procurer au poinçon (13) une souplesse prédéterminée à l'encontre de la résistance que le poussoir (11, 12) oppose audit poinçon (13) en réaction à l'effort de serrage (F15, F16).

3. Dispositif selon la revendication 1 ou 2 **caractérisé en ce que** l'organe d'appui (17, 18) est agencé de manière à ce que l'aire de contact (19) entre la rampe (15, 16) et l'organe d'appui (17, 18) d'une part se situe au dos (11B, 12B) du poussoir (11, 12), à l'opposé radialement du pied (6, 7) et de la face réceptrice (3E, 4I), et d'autre part est contenue dans la plage axiale (H6, H7) que vient occuper le pied (6, 7) concerné le long de l'axe central (Z3).

4. Dispositif selon l'une des revendications précédentes **caractérisé en ce que** l'organe d'appui (17, 18) est formé par un galet (21, 22) qui est monté en rotation sur un axe (X21, X22) porté par le poussoir (11, 12) et orthoradial par rapport à l'axe central (Z3), de sorte que ledit galet (21, 22) roule sur la rampe (15, 16) lorsque le poinçon (13) se déplace axialement.

5. Dispositif selon l'une des revendications précédentes **caractérisé en ce que** le poussoir (11, 12) possède un canon de guidage (23, 24) qui délimite une fente de passage (25, 26), à l'intérieur de laquelle le poinçon (13) s'enfonce lors de son déplacement axial et dont la paroi interne présente l'organe appui (17, 18).

6. Dispositif selon l'une des revendications précédentes **caractérisé en ce que** le poussoir (11, 12) est guidé radialement par un premier guide (30) situé à une première extrémité axiale dudit poussoir (11, 12) et par un second guide (31) distinct du premier guide (30) et situé à une seconde extrémité axiale dudit poussoir (11, 12) opposée à la première extrémité, de sorte que l'aire de contact (19) entre la rampe (15, 16) du poinçon (13) et l'organe d'appui (17,18) du poussoir (11, 12) se situe entre lesdits premier et second guides (30, 31), à distance desdits guides (30, 31), de préférence à équidistance desdits guides (30, 31).

7. Dispositif selon l'une des revendications précédentes **caractérisé en ce qu'**au moins une partie, et de préférence la totalité, des sous-ensembles presseurs (10) comprennent chacun un poinçon (13) qui est pourvu d'une première rampe (15) agencée pour venir en prise avec un premier organe d'appui (17) porté par un premier poussoir (11) conçu pour presser le premier pied (6) du rayon (5) concerné contre le moyeu (3), et d'une seconde rampe (16) agencée pour venir en prise avec un second organe d'appui (18) porté par un second poussoir (12) conçu pour presser le second pied (7) dudit rayon (5) contre la bande annulaire périphérique (4).

8. Dispositif selon les revendications 5 et 7 **caractérisé en ce que** chacun des premier et second poussoirs (11, 12) possède un canon de guidage (23, 24), **en ce que** les fentes de passage (25, 26) correspondantes sont alignées axialement de sorte à pouvoir être traversées simultanément par le poinçon (13), et **en ce que** les premier et second organes d'appui (17, 18), de préférence formés par un premier et un second galet (21, 22), sont situés sur des portions radialement opposées des parois internes des première et seconde fente de passage (25, 26) de sorte à venir en appui respectivement contre la première rampe (15) et la seconde rampe (16) qui se situent sur les chants (13I, 13E) radialement opposés du poinçon (13).

9. Dispositif selon l'une des revendications 7 ou 8 **caractérisé en ce que** les première et seconde rampes (15, 16) et les organes d'appui (17, 18) sont agencés de sorte que le système d'entraînement (20) génère un déplacement simultané du premier poussoir (11) et du second poussoir (12) à l'encontre respectivement du premier pied (6) du rayon (5) et du second pied (7) du rayon (5).

10. Dispositif selon l'une des revendications précédentes **caractérisé en ce qu'**il comprend un système d'entraînement (20) partagé, commun à plusieurs des sous-ensembles presseurs (10), et de préférence commun à tous les sous-ensembles presseurs (10), ledit système d'entraînement (20) partagé comprenant un plateau d'actionnement (32) qui est monté mobile en translation axiale le long de l'axe central (Z3), et qui possède une série de culasses (33) réparties autour de l'axe central (Z3) et agencées pour engager chacune la queue (13T) d'un poinçon (13) de sorte à pouvoir exercer une poussée axiale sur ledit poinçon (13).

11. Dispositif selon l'une des revendications précédentes **caractérisé en ce qu'**il comprend autant de sous-ensembles presseurs (10) répartis autour de l'axe central (Z3) qu'il y a de rayons (5) au sein du bandage (2).

12. Dispositif selon l'une des revendications précédentes **caractérisé en ce qu'**il comprend un ou plusieurs verrous (45) agencés de manière à maintenir passivement les poinçons (13) dans une position enfoncée, après que le système d'entraînement (20) a déplacé axialement lesdits poinçons (13), de manière à maintenir les pieds (6, 7) des rayons (5) pressés contre leurs faces réceptrices (3E, 4I) respectives.

## Patentansprüche

1. Montagevorrichtung (1), die für die Herstellung eines Reifens (2) bestimmt ist, welcher Folgendes beinhaltet: eine Nabe (3), die eine Mittelachse (Z3) aufweist, einen ringförmigen Umfangsstreifen (4), der zu der Nabe (3) koaxial ist, und eine Vielzahl von Speichen (5), die die Nabe (3) mit dem ringförmigen Umfangsstreifen (4) verbinden und die hierzu jeweils einen ersten Fuß (6), der an einer radial äußeren Fläche (3E) der Nabe (3), die eine erste Aufnahmefläche (3E) bildet, befestigt ist, und einen zweiten Fuß (7), der an einer radial inneren Fläche (4I) des ringförmigen Umfangsstreifens (4), die eine zweite Aufnahmefläche (41) bildet, befestigt ist, beinhalten, wobei die Montagevorrichtung (1) eine Vielzahl von Andrückunterbaugruppen (10) beinhaltet, die jeweils für die Befestigung einer separaten Speiche (5) zuständig sind und die jeweils mindestens ein Schubelement (11, 12) umfassen, das dazu eingerichtet ist, einen von dem ersten und dem zweiten Fuß (6, 7) der betroffenen Speiche (5) gegen die Aufnahmefläche (3E, 4I) der Nabe (3) bzw. des ringförmigen Umfangsstreifens (4), die dem Fuß (6, 7) der Speiche entspricht, zu drücken, wobei die Montagevorrichtung **dadurch gekennzeichnet ist, dass** jede der Andrückunterbaugruppen (10) einen Stempel (13) beinhaltet, der entlang einer axialen Richtung (Z13) parallel zu der Mittelachse (Z3) in Abhängigkeit von einem Antriebssystem (20) beweglich angebracht ist und der mindestens eine Rampe (15, 16) aufweist, die in einer radialen Ebene, die die Mittelachse (Z3) enthält, progressiv von der axialen Richtung (Z13) abweicht und die mit einem Anlageorgan (17, 18) zusammenwirkt, das mit dem Schubelement (11, 12) fest verbunden ist, sodass, wenn das Antriebssystem (20) den Stempel (13) axial gegen das Anlageorgan (17, 18) bewegt, die Rampe (15, 16) eine radiale Bewegung des Anlageorgans (17, 18) und somit des Schubelements (11, 12) bewirkt und dadurch mit Hilfe des Anlageorgans (17, 18) eine Spannkraft (F15, F16) erzeugt, die das Schubelement (11, 12) und folglich den Fuß (6, 7) der Speiche (5) gegen die Aufnahmefläche (3E, 4I) drückt.

2. Vorrichtung nach Anspruch 1, **dadurch gekennzeichnet, dass** eine Aufhängungsfeder (37) axial zwischen jeden Stempel (13) und das Antriebssystem (20) eingefügt ist, um dem Stempel (13) eine vorbestimmte Flexibilität gegenüber dem Widerstand zu verleihen, den das Schubelement (11, 12) dem Stempel (13) als Reaktion auf die Spannkraft (F15, F16) entgegensetzt.

3. Vorrichtung nach Anspruch 1 oder 2, **dadurch gekennzeichnet, dass** das Anlageorgan (17, 18) so eingerichtet ist, dass die Kontaktfläche (19) zwischen der Rampe (15, 16) und dem Anlageorgan (17, 18) sich einerseits auf der Rückseite (11B, 12B) des Schubelements (11, 12) radial entgegengesetzt zu dem Fuß (6, 7) und der Aufnahmefläche (3E, 4I) befindet und andererseits in dem Axialbereich (H6, H7) enthalten ist, den der betroffene Fuß (6, 7) entlang der Mittelachse (Z3) einnimmt.

4. Vorrichtung nach einem der vorhergehenden Ansprüche, **dadurch gekennzeichnet, dass** das Anlageorgan (17, 18) durch eine Rolle (21, 22) gebildet wird, die auf einer Achse (X21, X22), die durch das Schubelement (11, 12) getragen wird und in Bezug auf die Mittelachse (Z3) orthoradial ist, drehbar angebracht ist, sodass die Rolle (21, 22) auf der Rampe (15, 16) rollt, wenn sich der Stempel (13) axial bewegt.

5. Vorrichtung nach einem der vorhergehenden Ansprüche, **dadurch gekennzeichnet, dass** das Schubelement (11, 12) eine Führungsbuchse (23, 24) besitzt, die einen Durchgangsschlitz (25, 26) begrenzt, in den der Stempel (13) bei seiner axialen Bewegung eingedrückt wird und dessen Innenwand das Anlageorgan (17, 18) aufweist.

6. Vorrichtung nach einem der vorhergehenden Ansprüche, **dadurch gekennzeichnet, dass** das Schubelement (11, 12) durch eine erste Führung (30), die sich an einem ersten axialen Ende des Schubelements (11, 12) befindet, und durch eine zweite Führung (31), die sich von der ersten Führung (30) unterscheidet und sich an einem zweiten axialen Ende des Schubelements (11, 12) entgegengesetzt zu dem ersten Ende befindet, radial geführt wird, sodass sich die Kontaktfläche (19) zwischen der Rampe (15, 16) des Stempels (13) und dem Anlageorgan (17, 18) des Schubelements (11, 12) zwischen der ersten und der zweiten Führung (30, 31) in einem Abstand zu den Führungen (30, 31), vorzugsweise in einem äquidistanten Abstand zu den Führungen (30, 31), befindet.

7. Vorrichtung nach einem der vorhergehenden Ansprüche, **dadurch gekennzeichnet, dass** mindestens ein Teil, und vorzugsweise die Gesamtheit, der Andrückunterbaugruppen (10) jeweils einen Stempel (13) beinhalten, der über eine erste Rampe (15), die dazu eingerichtet ist, mit einem ersten Anlageorgan (17) in Eingriff zu kommen, das von einem ersten Schubelement (11) getragen wird, das dazu ausgelegt ist, den ersten Fuß (6) der betroffenen Speiche (5) gegen die Nabe (3) zu drücken, und über eine zweite Rampe (16), die dazu eingerichtet ist, mit einem zweiten Anlageorgan (18) in Eingriff zu kommen, das von einem zweiten Schubelement (12) getragen wird, das dazu ausgelegt ist, den zweiten Fuß (7) der Speiche (5) gegen den ringförmigen Umfangsstreifen (4) zu drücken, verfügt.

8. Vorrichtung nach den Ansprüchen 5 und 7, **dadurch gekennzeichnet, dass** jedes von dem ersten und dem zweiten Schubelement (11, 12) eine Führungsbuchse (23, 24) besitzt, dass die entsprechenden Durchgangsschlitze (25, 26) axial ausgerichtet sind, um von dem Stempel (13) gleichzeitig durchquert werden zu können, und dass sich das erste und das zweite Anlageorgan (17, 18), die vorzugsweise durch eine erste und eine zweite Rolle (21, 22) gebildet sind, an radial entgegengesetzten Abschnitten der Innenwände des ersten und des zweiten Durchgangsschlitzes (25, 26) befinden, um jeweils an der ersten Rampe (15) bzw. der zweiten Rampe (16), die sich an den radial entgegengesetzten Kanten (131, 13E) des Stempels (13) befinden, zur Anlage zu kommen.

9. Vorrichtung nach einem der Ansprüche 7 oder 8, **dadurch gekennzeichnet, dass** die erste und die zweite Rampe (15, 16) und die Anlageorgane (17, 18) so eingerichtet sind, dass das Antriebssystem (20) eine gleichzeitige Bewegung des ersten Schubelements (11) und des zweiten Schubelements (12) gegen jeweils den ersten Fuß (6) der Speiche (5) bzw. den zweiten Fuß (7) der Speiche (5) erzeugt.

10. Vorrichtung nach einem der vorhergehenden Ansprüche, **dadurch gekennzeichnet, dass** sie ein gemeinsam genutztes Antriebssystem (20) beinhaltet, das mehreren der Andrückunterbaugruppen (10) gemein ist und vorzugsweise allen Andrückunterbaugruppen (10) gemein ist, wobei das gemeinsam genutzte Antriebssystem (20) eine Betätigungsplatte (32) beinhaltet, die entlang der Mittelachse (Z3) axial translatorisch bewegbar angebracht ist und eine Reihe von Köpfen (33) besitzt, die um die Mittelachse (Z3) verteilt sind und dazu eingerichtet sind, jeweils mit einem Ende (13T) eines Stempels (13) in Eingriff zu kommen, um eine axiale Schubkraft auf den Stempel (13) ausüben zu können.

11. Vorrichtung nach einem der vorhergehenden Ansprüche, **dadurch gekennzeichnet, dass** sie genauso viele Andrückunterbaugruppen (10), die um die Mittelachse (Z3) verteilt sind, wie Speichen (5) innerhalb des Reifens (2) beinhaltet.

12. Vorrichtung nach einem der vorhergehenden Ansprüche, **dadurch gekennzeichnet, dass** sie eine oder mehrere Verriegelungen (45) beinhaltet, die so eingerichtet sind, dass sie die Stempel (13) passiv in einer eingedrückten Position halten, nachdem das Antriebssystem (20) die Stempel (13) axial bewegt hat, um die Füße (6, 7) der Speichen (5) gegen ihre jeweiligen Aufnahmeflächen (3E, 4I) gedrückt zu halten.

## Claims

1. Assembly device (1) for manufacturing a tyre (2) that comprises a hub (3) having a central axis (Z3), a peripheral annular band (4) coaxial with the hub (3), and a plurality of spokes (5) that connect the hub (3) to the peripheral annular band (4) and to this end each comprise a first end (6) fastened on a radially outer face (3E) of said hub (3) forming a first receiving face (3E) and a second end (7) fastened on a radially inner face (4I) of said peripheral annular band (4) forming a second receiving face (41), said assembly device (1) comprising a plurality of pressing sub-assemblies (10) that are each assigned to fastening a separate spoke (5) and that each comprise at least one pusher (11, 12) arranged to press one of the first and second ends (6, 7) of the spoke (5) in question against the receiving face (3E, 41) of the hub (3) or of the peripheral annular band (4), respectively, that corresponds to said end (6, 7) of the spoke, said assembly device being **characterized in that** each of said pressing sub-assemblies (10) comprises a punch (13) that is mounted movably in an axial direction (Z13) parallel to the central axis (Z3), under the control of a drive system (20), and that has at least one ramp (15, 16) which, in a radial plane containing the central axis (Z3), diverges progressively from the axial direction (Z13) and collaborates with a bearing member (17, 18) secured to the pusher (11, 12) so that when the drive system (20) moves the punch (13) axially against the bearing member (17, 18), the ramp (15, 16) causes said bearing member (17, 18) and, therefore, the pusher (11, 12) to move radially and thus, via the bearing member (17, 18), generates a clamping force (F15, F16) that presses said pusher (11, 12) and, therefore, the end (6, 7) of the spoke (5) radially against the receiving face (3E, 4I).

2. Device according to Claim 1, **characterized in that** a suspension spring (37) is interposed axially between each punch (13) and the drive system (20) so as to give the punch (13) a predetermined resilience to the resistance offered by the pusher (11, 12) to said punch (13) in reaction to the clamping force (F15, F16).

3. Device according to Claim 1 or 2, **characterized in that** the bearing member (17, 18) is arranged in such a way that the contact area (19) of contact between the ramp (15, 16) and the bearing member (17, 18) is, on the one hand, situated on the back (11B, 12B) of the pusher (11, 12) radially opposite the end (6, 7) and the receiving face (3E, 4I) and, on the other hand, contained in the axial range (H6, H7) that the end (6, 7) in question is to occupy along the central axis (Z3).

4. Device according to any one of the preceding claims, **characterized in that** the bearing member (17, 18) is formed by a roller (21, 22) which is rotatably mounted on an axle (X21, X22) borne by the pusher (11, 12) and orthoradial with respect to the central axis (Z3), so said roller (21, 22) rolls along the ramp (15, 16) as the punch (13) moves axially.

5. Device according to one of the preceding claims, **characterized in that** the pusher (11, 12) has a guide barrel (23, 24) which delimits a through-slot (25, 26) into which the punch (13) is pushed as it moves axially and the inner wall of which has the bearing member (17, 18).

6. Device according to one of the preceding claims, **characterized in that** the pusher (11, 12) is radially guided by a first guide (30) situated at a first axial end of said pusher (11, 12) and by a second guide (31) separate from the first guide (30) and situated at a second axial end of said pusher (11, 12) opposite the first end, so that the contact area (19) of contact between the ramp (15, 16) of the punch (13) and the bearing member (17, 18) of the pusher (11, 12) is situated between said first and second guides (30, 31), at a distance from said guides (30, 31), preferably equidistant from said guides (30, 31).

7. Device according to one of the preceding claims, **characterized in that** at least some, and preferably all, of the pressing sub-assemblies (10) each comprise a punch (13) which is provided with a first ramp (15) designed to engage with a first bearing member (17) borne by a first pusher (11) designed to press the first end (6) of the spoke (5) in question against the hub (3), and with a second ramp (16) designed to engage with a second bearing member (18) borne by a second pusher (12) designed to press the second end (7) of said spoke (5) against the peripheral annular band (4).

8. Device according to Claims 5 and 7, **characterized in that** each of the first and second pushers (11, 12) has a guide barrel (23, 24), **in that** the corresponding through-slots (25, 26) are axially aligned so that the punch (13) can pass through them simultaneously, and **in that** the first and second bearing members (17, 18), preferably formed by a first and second roller (21, 22), are situated on radially opposite portions of the inner walls of the first and second through-slot (25, 26) so as to come to bear, respectively, against the first ramp (15) and the second ramp (16) which are situated on the radially opposite edges (13I, 13E) of the punch (13).

9. Device according to one of Claims 7 or 8, **characterized in that** the first and second ramps (15, 16) and the bearing members (17, 18) are arranged in such a way that the drive system (20) causes simultaneous movement of the first pusher (11) and of the second pusher (12) against, respectively, the first end (6) of the spoke (5) and the second end (7) of the spoke (5).

10. Device according to one of the preceding claims, **characterized in that** it comprises a shared drive system (20), common to several of the pressing sub-assemblies (10), and preferably common to all the pressing sub-assemblies (10), said shared drive system (20) comprising an actuating plate (32) which is mounted movably in axial translation along the central axis (Z3) and has a series of end caps (33) distributed about the central axis (Z3) and arranged to each engage the tail (13T) of a punch (13) so as to be able to apply axial thrust to said punch (13).

11. Device according to one of the preceding claims, **characterized in that** it comprises as many pressing sub-assemblies (10) distributed about the central axis (Z3) as there are spokes (5) in the tyre (2).

12. Device according to one of the preceding claims, **characterized in that** it comprises one or more latches (45) arranged in such a way as to passively keep the punches (13) in a pushed-in position after the drive system (20) has moved said punches (13) axially, so as to keep the ends (6, 7) of the spokes (5) pressed against their respective receiving faces (3E, 41).
